(19) **Europäisches Patentamt European Patent Office Office européen des brevets**

(11) **EP 2 598 911 B1**

(12) **FASCICULE DE BREVET EUROPEEN**

(45) Date de publication et mention de la délivrance du brevet:
**18.06.2014 Bulletin 2014/25**

(51) Int Cl.:
***G01S 19/20*** *(2010.01)*

(21) Numéro de dépôt: **11731402.1**

(22) Date de dépôt: **15.07.2011**

(86) Numéro de dépôt international:
**PCT/EP2011/062173**

(87) Numéro de publication internationale:
**WO 2012/013524 (02.02.2012 Gazette 2012/05)**

(54) **PROCEDE DE DETECTION ET D'EXCLUSION DE MULTI-PANNES SATELLITES**

VERFAHREN FÜR DIE DETEKTION UND DEN AUSSCHLUSS MEHRERER SATELLITENAUSFÄLLE

METHOD FOR DETECTING AND EXCLUDING MULTIPLE SATELLITE FAILURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2010 FR 1056282**

(43) Date de publication de la demande:
**05.06.2013 Bulletin 2013/23**

(73) Titulaires:
- **Sagem Défense Sécurité**
  **92100 Boulogne-Billancourt (FR)**
- **UNIVERSITE DE BORDEAUX**
  **33000 Bordeaux (FR)**
- **Institut Polytechnique de Bordeaux**
  **33400 Talence (FR)**

(72) Inventeurs:
- **NAJIM, Mohamed**
  **F-33400 Talence (FR)**
- **GIREMUS, Audrey**
  **F-33400 Talence (FR)**
- **FAURIE, Frédéric**
  **F-33000 Bordeaux (FR)**

(74) Mandataire: **Regimbeau**
  **20, rue de Chazelles**
  **75847 Paris Cedex 17 (FR)**

(56) Documents cités:
**EP-A1- 2 120 060     US-A1- 2003 117 317**

- **AUDREY GIREMUS AND ANNE-CHRISTINE ESCHER: "A GLR Algorithm to Detect and Exclude up to Two Simultaneous Range Failures in a GPS/Galileo/IRS Case", PROCEEDINGS OF ION GNSS 2007, 25 septembre 2007 (2007-09-25), pages 2911-2923, XP002636755, Forth Worth, TX, USA**

EP 2 598 911 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE GENERAL

La présente invention se rapporte au domaine des systèmes de contrôle d'intégrité pour l'aviation.

Plus précisément, elle concerne un procédé permettant de détecter et d'exclure une ou plusieurs pannes satellites dans un système de navigation.

ETAT DE L'ART

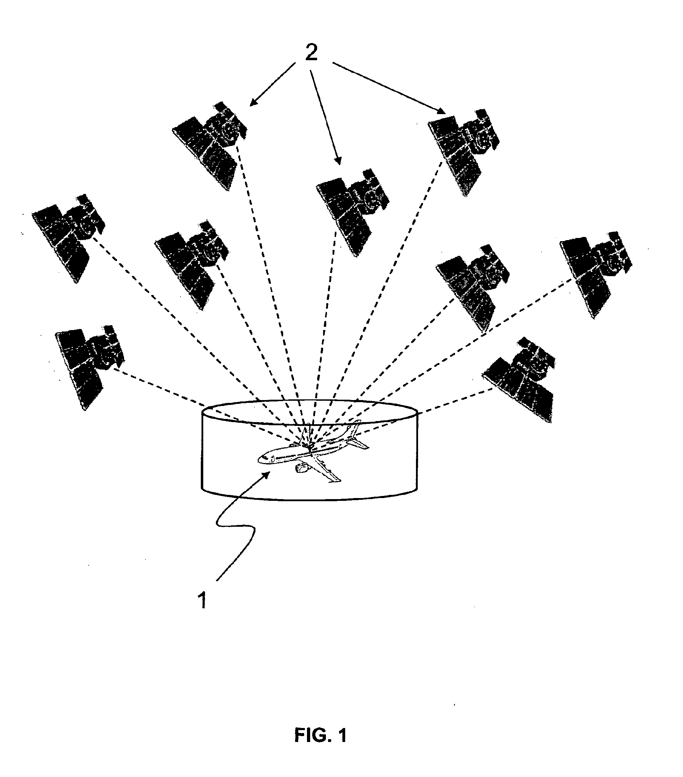

Les véhicules possédant des systèmes de navigation par satellites sont classiquement équipés d'un récepteur qui poursuit N satellites, comme représenté sur la figure 1. Toutes les secondes, le récepteur doit déterminer sa position à partir des N mesures provenant des satellites en vue.

Pour chacun de ces satellites, le récepteur calcule une estimation de la distance le séparant de celui-ci, appelée pseudo-distance du fait des différentes erreurs dont elle est entachée. Chaque mesure est en effet perturbée par un bruit de mesure dû notamment à la traversée de l'onde dans l'atmosphère. Néanmoins, les caractéristiques statistiques de ces bruits de mesure sont connues et ces perturbations ne sont pas considérées comme des pannes.

En revanche, certains satellites peuvent présenter des défauts plus importants et fournir des informations erronées au récepteur, dégradant ainsi dangeureusement la précision de la solution de navigation. Ces pannes satellites, essentiellement dues à des dysfonctionnements de l'horloge satellite ou à des problèmes d'éphémérides, se traduisent par des biais sur la ou les mesures satellite en panne qui doivent être détectés. Ces biais s'ajoutent aux mesures et sont modélisés soit par des échelons soit par des rampes évoluant avec le temps.

Même si ces pannes satellites sont rarissimes (probabilité de l'ordre de $10^{-4}$/h par satellite), les systèmes de navigation doivent prendre en compte ce risque, en particulier dans l'aviation, où un écart de position peut être fatal.

Les systèmes de contrôle d'intégrité ont pour objet la détection et l'exclusion des pannes satellites. On distingue deux configurations différentes pour les systèmes de contrôle d'intégrité. Lorsque le système est couplé à un système d'aide à la navigation (comme une centrale inertielle), on parle de contexte AAIM (pour Aircraft Autonomous Integrity Monitoring en anglais). Lorsque le système de contrôle d'intégrité fonctionne de manière autonome, on parle de contexte RAIM (pour Receiver Autonomous Integrity Monitoring en anglais). A une probabilité de détection manquée donnée, fixée par l'Organisation de l'Aviation Civile Internationale (OACI), les systèmes de contrôle d'intégrité doivent être capables de fournir une borne sur l'erreur de position de l'appareil, et ainsi une zone de protection autour de lui.

Jusqu'à récemment, l'unique hypothèse d'une seule panne satellite suffisait à satisfaire aux exigences de l'OACI. Mais avec le déploiement prochain de nouvelles constellations de satellites (Galiléo en 2014 et le GPS modernisé en 2013), ainsi que le durcissement des exigences de l'OACI, les systèmes de contrôle d'intégrité, doivent aujourd'hui prendre en compte l'augmentation du nombre de mesures satellites disponibles. En particulier, ils doivent pouvoir traiter plusieurs pannes satellites simultanées, événement dont la probabilité d'occurrence n'est plus négligeable.

Divers procédés ont été proposés jusqu'à présent pour apporter une solution au problème du contôle d'intégrité.

Dans un contexte RAIM, seule la redondance entre les mesures satellites est mise à profit. Sous l'hypothèse d'une seule panne, la méthode dite des résidus repose sur un estimateur utilisant les $N$ mesures disponibles et sur un banc d'estimateurs utilisant $N$-1 mesures et excluant chacun une mesure différente. Les estimateurs utilisés sont de type moindres carrés. La détection de panne se fait par un test du $\chi^2$ à partir de l'estimateur utilisant les N mesures. L'exclusion se fait aussi par un test statistique de type $\chi^2$ cette fois à partir des estimateurs utilisant $N$-1 mesures.

Cette approche peut être étendue au cas de plusieurs pannes simultanées en ajoutant des bancs d'estimateurs excluant plus d'une mesure, mais dont le nombre dépend directement du nombre de pannes considérées à un même instant. Ainsi, le coût calculatoire est largement augmenté pour le cas d'une double panne par exemple.

Le système RANCO (pour Range Consensus en anglais), présenté dans le document « Failure detection and exclusion via range consensus », Proceedings of the ENC GNSS (2008), par G. Schroth, A. Ene, J. Blanch, T.Walter, and P. Enge, utilise quant à lui un estimateur principal utilisant les N mesures disponibles et un banc d'estimateurs fondés sur différents quadruplets de mesures. Les estimateurs utilisés sont de type moindres carrés. Des tests multiples sont effectués en comparant les mesures exclues par chaque quadruplet avec les mesures prédites à partir de l'estimation de la solution de navigation fondée sur ce quadruplet. Par un mécanisme favorisant la cohérence des mesures entre elles, le système peut identifier les mesures défaillantes et exclure jusqu'à $N$-5 mesures à un même instant.

Les limitations de cette approche sont le choix des sous-groupes de mesures ainsi que la difficulté de décision d'exclusion parmi les tests. En effet, les tests multiples, fondés sur des sous groupes de mesures différents, peuvent indiquer des mesures fautives différentes, ce qui peut rendre la décision d'exclusion difficile. De plus, le coût calculatoire est directement lié au nombre d'estimateurs ainsi qu'au nombre de mesures disponibles.

Dans un contexte AAIM, le système de navigation est généralement couplé à une centrale inertielle. La solution de navigation est calculée par un filtre de Kalman mettant à profit les mesures satellitaires pour estimer les erreurs de position, vitesse et attitude de la centrale inertielle, ainsi que les erreurs systématiques affectant les capteurs inertiels. Les estimés du filtre de Kalman servent alors à corriger les sorties de la centrale inertielle.

Les approches MSS (pour Multiple Solution Separation en anglais) et AIME (pour Autonomous Integrity Monitored Extrapolation en anglais) offrent des premières solutions au problème de contrôle d'intégrité dans des contextes d'hybridation GPS/centrale inertielle. L'une comme l'autre reposent sur un estimateur principal fourni par un filtre de Kalman utilisant les N mesures disponibles, et sur des estimateurs fournis par un banc de filtres de Kalman utilisant *N-1* mesures et excluant chacun une mesure différente. Il est à noter que pour réaliser l'exclusion, l'approche MSS nécessite, quant à lui, un second banc d'estimateurs fondés sur *N-2* mesures.

Toutefois, comme dans la méthode des résidus, le nombre d'estimateurs dépend directement du nombre de pannes considérées à un même instant. Ainsi, le coût calculatoire est largement augmenté pour le cas de double panne à un même instant par exemple.

Une troisième solution, le GLR (pour Generalized Likelihood Ratio en anglais), présentée à l'origine dans le domaine de l'automatique et du contrôle, a été adaptée au contrôle d'intégrité pour la navigation par Palmqvist comme décrit dans le document « On integrity monitoring of integrated navigation systems », Thesis No. 600, Linkôping Studies in Science and Technology (1997). Le GLR classique a pour objet de détecter des défaillances ou pannes affectant des systèmes dont l'état est estimé par filtrage de Kalman. Il repose sur un test d'hypothèses multiples. Chaque hypothèse suppose un instant d'apparition de la panne auquel est associée une estimation de l'amplitude de la panne au sens des moindres carrés. Cette dernière est directement obtenue à partir des innovations (différence entre mesure reçue et mesure prédite par la solution de navigation estimée) calculées par le filtre de Kalman. Le nombre d'hypothèses est limité à une fenêtre d'analyse glissante de taille *L* pour maintenir une charge calculatoire raisonnable. La détection des pannes est fondée sur le rapport de vraisemblance entre une hypothèse d'instant d'apparition de panne et l'hypothèse sans panne. Le maximum de ces variables de test permet alors de définir l'instant d'apparition de la panne le plus vraisemblable.

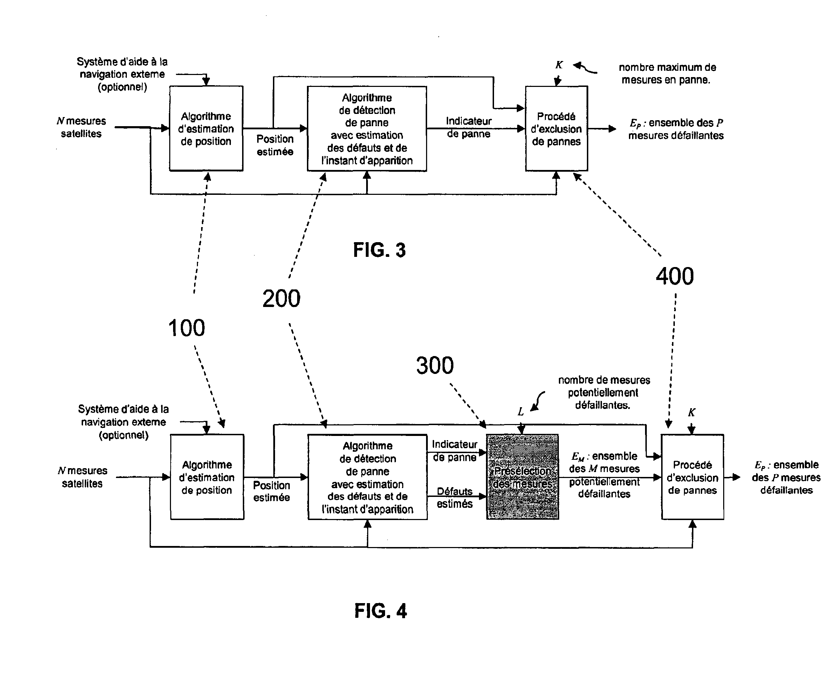

Par la suite, Giremus et Escher ont présenté dans le document « A GLR algorithm to detect and exclude up to two simultaneous range failures in a GPS/Galileo/IRS Case », Proc. of ION GNSS (2007), une amélioration permettant l'exclusion de jusqu'à *K* pannes satellites dans le contexte GNSS avec $K \geq 1$. L'approche proposée, représentée sur la figure 3, consiste à estimer par maximum de vraisemblance non seulement l'instant d'apparition de la ou les pannes mais aussi l'amplitude de ces pannes. Le principe est le suivant. Une fois la détection de panne effectuée par le système GLR, la méthode proposée teste de façon systématique les $\sum\limits_{P=1}^{K} C_N^P$ combinaisons de pannes possibles pour N mesures disponibles de la façon suivante (avec $C_N^P$ le nombre de combinaisons de *P* éléments parmi *N) :*

- estimation des composantes non nulles d'un vecteur de biais $b_t$ selon la combinaison de mesures supposées en panne ;
- test statistique fondé sur le vecteur de biais estimé.

Par rapport à l'étape de détection où les *N* composantes du biais sont estimées, le problème d'estimation résolu est de dimension inférieure. Une meilleure estimation de l'amplitude des pannes est alors obtenue. Le maximum des tests statistiques auquel est associée une combinaison comprenant P mesures fautives avec $P \leq K \leq N$ est alors sélectionné. Si le test statistique est supérieur à un seuil prédéfini, l'approche désigne les *P* mesures comme fautives et fournit une nouvelle estimation du vecteur de biais pour les *P* mesures fautives.

En résumé, cette approche, fondée comme l'AIME sur les innovations du filtre de Kalman, s'avère intéressante car elle permet des délais de détection de panne plus petits que ceux du MSS tout en présentant des risques d'accommodation décrus en comparaison de l'AIME. De plus, la possibilité de pouvoir corriger la solution de navigation en fonction du biais estimé évite de réinitialiser la solution de navigation après détection/exclusion d'une panne. Cependant, l'architecture décrite assure la détection et l'exclusion de pannes multiples mais au prix d'une charge calculatoire élevée du fait de toutes les hypothèses à considérer.

Le Tableau 1 présente le nombre d'estimateurs associé aux méthodes présentées précédemment, dans le cas où l'exclusion jusqu'à deux pannes simultanées est prise en compte.

Tableau 1 : Coût calculatoire des différentes méthodes associé à l'exclusion de une à deux pannes simultanées parmi les $N$ mesures.

| Méthode | Nombre d'estimateurs type **filtre de Kalman** pour l'exclusion de 1 à 2 pannes simultanées | Nombre d'estimateurs type **moindres carrés** pour l'exclusion de 1 à 2 pannes simultanées |
|---|---|---|
| RAIM (méthode des résidus) | - | $N + \dfrac{N(N-1)}{2}$ |
| MSS | $\dfrac{N(N-1)}{2} + \dfrac{(N-1)(N-2)}{2}$ | - |
| GLR | - | $N + \dfrac{N(N-1)}{2}$ |
| AIME | $N + \dfrac{N(N-1)}{2}$ | - |

De manière générale, le coût calculatoire est donc en $O(N^2)$ pour l'exclusion de 1 à 2 pannes simultanées, ce qui monte si l'on considère jusqu'à $K$ pannes simultanées possibles à $O\left(\sum \dfrac{N!}{K!(N-K)!}\right)_{K \to N} \approx O(2^N)$.

Ce coût exponentiel est prohibitif sur les matériels actuels.

PRESENTATION DE L'INVENTION

La présente invention vise à résoudre ces difficultés en proposant un procédé de détection et d'exclusion de plusieurs pseudo-distances défaillantes. Ce procédé, à coût calculatoire fortement réduit, permet de considérer deux pannes satellitaires simultanées voire davantage dans une constellation d'une quinzaine de satellites sans nécessiter une puissance de calcul supérieure à celle des systèmes embarqués actuels, et donc sans coût supplémentaire.

Grâce à cette prise en compte d'un plus grand nombre d'incidents possible, l'invention permet une sécurité aérienne accrue, en considérant des cas qui jusque là auraient pu conduire à des catastrophes aériennes.

En outre, un but annexe de l'invention est de parvenir à cet objectif tout en proposant un procédé pouvant s'inscrire aussi bien dans un contexte AAIM que dans un contexte RAIM. Il y a donc une adaptabilité totale.

La présente invention se rapporte donc à un procédé de détection et d'exclusion d'au moins une pseudo-distance mesurée entre un satellite et un récepteur recevant des signaux émis par différents satellites d'une constellation de radio-positionnement, lorsque cette pseudo-distance est défaillante, caractérisé en ce qu'il comprend des étapes de :

(a) Détermination d'une estimation de la position du récepteur à partir des pseudo-distances mesurées par le récepteur ;
(b) Estimation, à partir de la position ainsi estimée, des biais dans les pseudo-distances mesurées ;
(c) Traitement des biais ainsi obtenus afin d'en déduire une valeur représentative de la probabilité d'une défaillance pour chaque pseudo-distance ;
(d) Présélection, en fonction des valeurs ainsi obtenues, d'un nombre donné de pseudo-distances les plus susceptibles de présenter une défaillance ;
(e) Détermination, pour chaque combinaison de pseudo-distances parmi les pseudo-distances ainsi présélectionnées, d'une valeur de variable de test représentative de la vraisemblance de la défaillance de la combinaison ;
(f) Sélection, en fonction des valeurs de variables de test ainsi obtenues, d'au moins une combinaison de pseudo-distances dont la défaillance est la plus vraisemblable ;
(g) Comparaison de la variable de test associée à la combinaison sélectionnée à un seuil prédéfini et transmission d'un signal vers le récepteur ou vers l'extérieur en fonction du résultat de cette comparaison.

Selon d'autres caractéristiques avantageuses et non limitatives de l'invention :

- une variable de test $T_j$, $j \in \left[ 1, \sum_{P=1}^{K} C_M^P \right]$, est calculée à l'étape (e) pour toutes les combinaisons possibles de 1 à $K$ pseudo-distances parmi les $M$ pseudo-distances présélectionnées à l'étape (d), $K$ étant un entier fixé inférieur ou égal à $M$ ;
- le calcul de chaque variable de test $T_j$ s'effectue grâce à un test statistique fondé sur une estimation du vecteur biais $b_t'$ correspondant à un vecteur biais $b_t$ dont les composantes non associées à la combinaison de mesures considérée sont mises à zéro ;
- le test statistique utilisé suit une loi du $\chi^2$ à $P$ degrés de liberté, $P$ étant le nombre de pseudo-distances composant la combinaison envisagée ;
- le seuil prédéfini utilisé lors de l'étape (g) est adapté en un seuil $T_{d,j}$ propre à chaque combinaison, le ratio $R_j = \dfrac{T_j}{T_{d,j}}$ étant construit et utilisé en lieu et place des variables de test $T_j$ ;
- $K$ est le nombre maximal de pseudo-distances défaillantes envisagées, et $M$ est un nombre supérieur au nombre maximal de pseudo-distances défaillantes envisagées ;
- l'étape (b) fournit en outre l'estimation $\hat{k}$ de l'instant d'apparition des biais estimés ;
- l'étape (b) comprend des sous-étapes de :

  (b1) Estimation d'une pluralité de vecteur biais $b_t$, chacun sous une hypothèse d'apparition de panne à un instant $k \in [t - L + 1, t]$ d'une fenêtre d'analyse glissante de taille $L$ fixée ;
  (b2) Calcul, à chaque instant $k$ considéré, d'un rapport $R_t[k]$ de vraisemblance entre l'hypothèse d'apparition de panne à l'instant $k$ et l'hypothèse sans panne, en fonction des biais estimés sous l'hypothèse d'apparition de panne à l'instant $k$ ;
  (b3) Estimation de l'instant d'apparition de panne le plus vraisemblable $\hat{k}$ à partir des rapports de vraisemblance ;
  (b4) Sélection du vecteur biais correspondant à l'hypothèse d'apparition de panne à l'instant $\hat{k}$ ;

- l'étape (b) comprend en outre une sous-étape (b5) d'alerte si le rapport de vraisemblance associé à l'instant $\hat{k}$ atteint un seuil prédéfini ;
- un vecteur biais $b_t$ sous l'hypothèse d'apparition de panne à un instant $k$ est obtenu à partir de l'innovation calculée par un filtre de Kalman à l'instant $k$, ledit filtre de Kalman réalisant l'étape (a) ;
- les biais sont exprimés en fonction du temps $t$ et de l'indice $i$ associé à une pseudo-distance, sous une forme $b_{i,t}[k] = \alpha_i + \beta_i(t-k)$ ;
- les valeurs représentatives de la probabilité d'une défaillance pour chaque pseudo-distance obtenus à l'étape (c) sont des critères de panne $\Gamma_i$ exprimés sous une forme $\Gamma_i = [\hat{\alpha}_i, \hat{\beta}_i](C_i)^{-1}[\hat{\alpha}, \hat{\beta}]^T$ ;
- les $M$ pseudo-distances les plus susceptibles de présenter une défaillance sont les $M$ pseudo-distances associées aux $M$ plus grandes valeurs de $\{\Gamma_i\}_{i \in [1,N]}$, $M$ étant le nombre donné de pseudo-distances à présélectionner ;
- la combinaison de mesures défaillantes la plus vraisemblable est la combinaison associée au ratio $R_{EP}$ tel que

$$R_{E_P} = \max \left\{ R_j \right\}_{j \in [1, 2^M]}.$$

Selon un deuxième aspect, l'invention se rapporte à un système de contrôle d'intégrité comprenant des moyens de traitement de données, associé à un récepteur recevant des signaux émis par différents satellites d'une constellation de radio-positionnement et fournissant au système des pseudo-distances mesurées entre des satellites de ladite constellation et le récepteur sur lesquelles les moyens mettent en oeuvre un procédé selon le premier aspect de l'invention, à l'issue duquel un signal est transmis au récepteur.

Selon d'autres caractéristiques avantageuses et non limitatives de l'invention :

- le système est couplé à un dispositif de navigation inertielle selon un contexte AAIM.

L'invention concerne enfin un véhicule équipé d'un système selon le deuxième aspect de l'invention.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

-   la figure 1 est un schéma d'une constellation de satellites envoyant des données à un avion dans son volume de protection ;
-   la figure 2 est un schéma d'un mode de réalisation d'un système de contrôle d'intégrité selon l'invention associé à un récepteur.
-   la figure 3 est un schéma d'un procédé connu de détection et d'exclusion d'au moins une mesure défaillante d'une pseudo-distance d'un satellite avec un récepteur ;
-   la figure 4 est un schéma d'un mode de réalisation du procédé de détection et d'exclusion d'au moins une mesure défaillante d'une pseudo-distance d'un satellite avec un récepteur selon l'invention ;
-   la figure 5 est un diagramme représentant les étapes d'un mode de réalisation du procédé de détection et d'exclusion d'au moins une mesure défaillante d'une pseudo-distance d'un satellite avec un récepteur selon l'invention ;
-   la figure 6 est un schéma d'un mode de réalisation d'une étape du procédé de détection et d'exclusion d'au moins une mesure défaillante d'une pseudo-distance d'un satellite avec un récepteur selon l'invention ;

DESCRIPTION DETAILLEE

Comme représenté sur les figures 1 puis 2, un véhicule 1 tel un avion, équipé d'un récepteur 10 de type GNSS, reçoit des signaux électromagnétiques (généralement des micro-ondes) provenant d'une pluralité de satellites 2 formant une constellation de radio-positionnement.

Chaque satellite 2 est équipé d'une horloge de haute précision, et le récepteur 10 connaît avec précision leur position grâce à des éphémérides stockées dans une mémoire 13. Grâce à l'horloge, on peut mesurer avec précision le temps mis par un signal pour effectuer le trajet entre le satellite 2 et le récepteur. Pour cela, le récepteur 10 estime par une technique de corrélation le temps de propagation du signal satellitaire, entre l'émission et sa réception. Connaissant la vitesse de la lumière, à laquelle se déplace l'onde du signal, un calculateur 11 que comprend le récepteur 10 multiplie la durée mesurée par cette vitesse, fournissant la pseudo-distance qui le sépare du satellite 2, comme expliqué précédemment. Le fait que la distance ne soit pas connue de façon sure à cause notamment du bruit de mesure entraîne une légère incertitude sur la position du véhicule 1. Le cylindre représenté sur la figure 1 correspond au volume centré sur la position estimée dans lequel la présence du véhicule est garantie.

De façon générale, l'équation de mesure de navigation par satellite parmi une constellation de N satellites s'écrit :

$$\widetilde{Y}_t = h_t\left(r_t, b_{\mathrm{H},t}\right) + \varepsilon_t + b_t$$

où, à l'instant $t$ :

$\widetilde{Y}_t$ est le vecteur contenant les $N$ mesures formées par le récepteur, c'est-à-dire les $N$ pseudo-distances calculées selon le principe ci-dessus avec chacun des $N$ satellites.

$\varepsilon_t$ est le vecteur des $N$ bruits de mesure supposés gaussiens et centrés,

$b_t$ est le vecteur des N biais impactant les $N$ mesures dont plusieurs composantes peuvent être non nulles,

la $i^{ème}$ composante de la fonction vectorielle $h_t(.)$ représente la distance géométrique séparant le récepteur du $i^{ème}$ satellite, perturbée par le biais d'horloge. Elle s'exprime de la façon suivante : $h_t^i\left(r_t, b_{\mathrm{H},t}\right) = \left\| r_t - r_t^i \right\| + b_{\mathrm{H},t}$ où $b_{\mathrm{H},t}$ est le biais d'horloge, $et\ r_t$ et $r_t^i$ désignent la position en coordonnées cartésiennes du récepteur et du $i^{ème}$ satellite, respectivement. On appelle $E_N$ l'ensemble tel que son $i^{ème}$ élément $E_N^i, i \in [1,N]$ est la $i^{ème}$ mesure satellitaire.

En linéarisant autour d'un point adéquatement choisi, l'équation de mesure devient $Y_t = H_t X_t + \varepsilon_t$ où, à l'instant $t$ :

$X_t$ est le vecteur d'état contenant la position du récepteur,

$H_t$ est la matrice d'observation linéarisée.

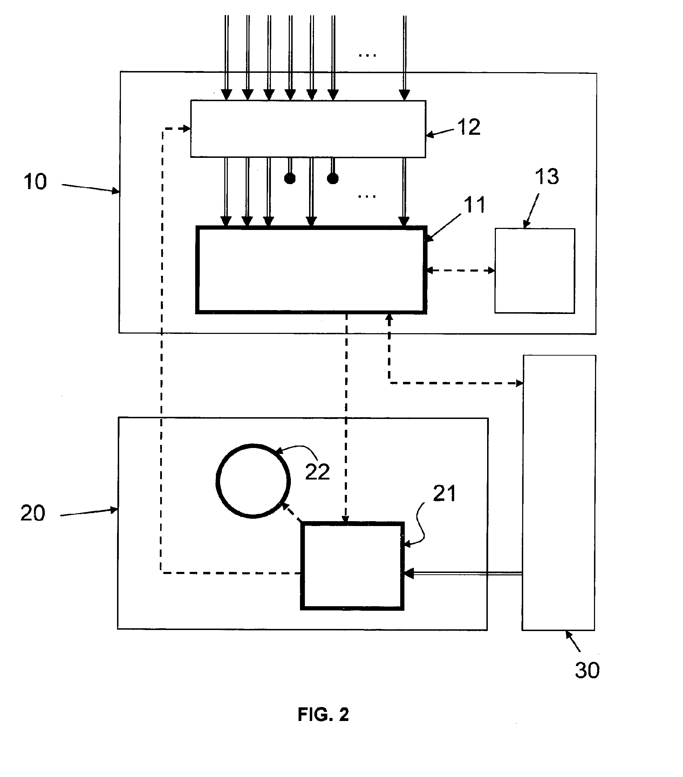

Le procédé de détection et d'exclusion selon l'invention est mis en oeuvre par un système de contrôle d'intégrité 20, également représenté sur la figure 2, associé au récepteur 10. Ce système 20 reçoit les *N* mesures satellitaires fournies par le récepteur 10. Dans la suite de la description, on désignera par $i^{ème}$ mesure satellitaire la pseudo-distance mesurée entre le $i^{ème}$ satellite de la constellation de radio-positionnement observée et le récepteur 10, calculée par un calculateur 11 que comprend ce récepteur 10.

Après traitement, le plus souvent le système de contrôle d'intégrité 20 ne fait rien, en l'occurrence en l'absence de pseudo-distance défaillante. Dans le cas contraire, il exclut les P mesures identifiées comme défaillantes de l'ensemble des *N* mesures. Pour cela, le récepteur 10 comprend des moyens 12 de gestion des canaux, c'est-à-dire une unité qui écoute les satellites 2 et choisit ou non d'utiliser les mesures satellitaires associées. Si le procédé détecte une panne sur une combinaison de satellites, il envoie aux moyens 12 de gestion des canaux l'instruction de ne plus utiliser les mesures satellitaires associées aux satellites déclarés comme défaillants.

Jusqu'à ce que le problème soit considéré comme résolu, le véhicule 1 équipé du système 20 de contrôle d'intégrité et du récepteur 10 naviguera en tenant compte uniquement des mesures fournies par les autres satellites, qui eux sont encore considérés comme fiables. Une alarme peut éventuellement être levée pour prévenir de la détection et de l'exclusion de mesures défaillantes.

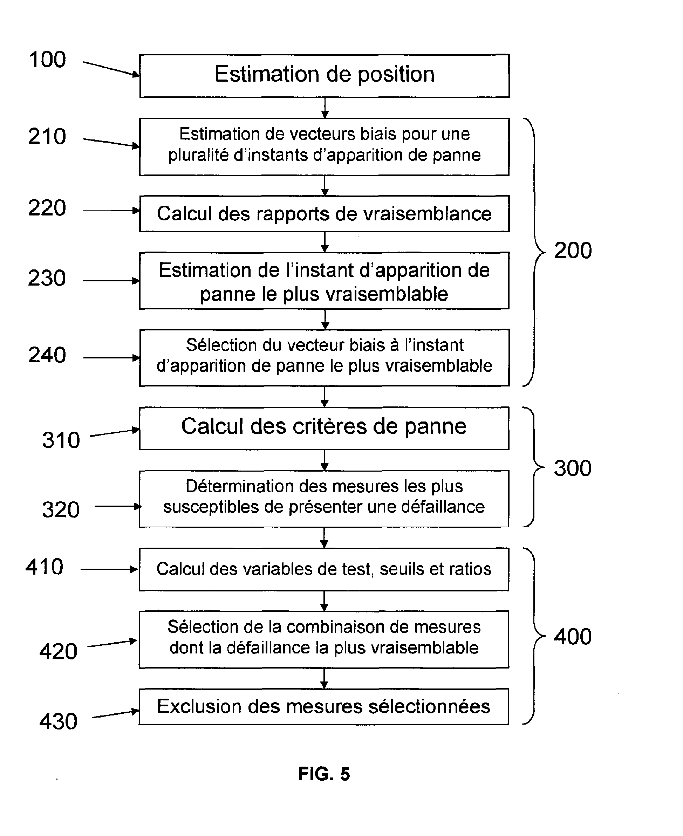

Les étapes d'un mode de réalisation du procédé de détection et d'exclusion selon l'invention sont représentées sur la figure 4, et plus particulièrement sur la figure 5.

*Estimation de position*

La détection et l'exclusion de pannes commencent de façon similaire à un procédé de type GLR par une première étape 100 de détermination d'une estimation de la position du récepteur 10 à partir des N mesures satellitaires, estimation qui fournit à chaque instant *t* les coordonnées du véhicule 1.

Cette étape 100 s'adapte à un contexte RAIM comme à un contexte AAIM. En effet, dans le second cas elle peut avantageusement inclure des données provenant d'un système de navigation externe.

Dans un cas comme dans l'autre, des algorithmes permettant d'obtenir l'estimation de la position du récepteur 10 sont connus, par exemple on pourra utiliser un filtre de Kalman.

*Détection de panne*

Une fois la position du récepteur 10 estimée, le procédé selon l'invention détermine, au cours d'une seconde étape 200, à partir des *N* mesures satellitaires disponibles et de la position du mobile estimée, la présence ou l'absence de panne.

Pour cela, le système 20 va fournir une estimation d'un vecteur de biais $b_t$ perturbant les mesures (estimation des défauts) à l'instant *t*, et avantageusement de son instant d'apparition, noté $\hat{k}$. Ce vecteur $b_t$ est formé des biais affectant chacune des pseudo-distances mesurées,. Pour cela, une approche avantageuse réduisant la charge calculatoire consiste à analyser une fenêtre glissante temporelle de largeur L. Chacun des instants $k \in [t - L + 1, t]$ est potentiellement l'instant d'apparition de la panne. Les moyens 21 de traitement du système 20 d'exclusion estiment donc lors d'une première sous-étape 210 des vecteurs biais $b_t$ pour une pluralité d'instants *k*. Si un filtre de Kalman a été utilisé pour l'estimation de position, le vecteur biais $b_t$ pour un instant *k* (noté simplement vecteur $b_t[k]$) peut très avantageusement être déduit par une estimation au sens des moindres carrés sur le vecteur d'innovation du filtre de Kalman à l'instant *k*. Alternativement, d'autres algorithmes permettant ce calcul sont connus, et l'homme de l'art saura les adapter à l'invention.

Pour chacun de ces vecteurs biais $b_t[k]$, les moyens 21 de traitement calculent ensuite au cours d'une sous-étape 220 un rapport $R_t[k]$ de vraisemblance entre l'hypothèse d'apparition de panne à l'instant *k*, notée $H_k$, et l'hypothèse sans panne, notée $H_0$. Il s'agit par exemple d'un ratio de probabilités conditionnelles

$$R_t[k] = 2\log\frac{p(Y_{k:t} \mid H_k, Y_{1:k-1}, \hat{b}[k])}{p(Y_{k:t} \mid H_0, Y_{1:k-1})}.$$

Dans une sous-étape 230 suivante, une estimation de l'instant d'apparition de panne le plus vraisemblable $\hat{k}$ est alors faite à partir des rapports de vraisemblance. Dans l'hypothèse d'une utilisation de la formule précédente, cela est réalisé en prenant le maximum des rapports sur la pluralité d'instant *k* de la fenêtre testés : $\hat{k} = \arg\max_k(R_t[k])$. Le vecteur biais $b_t$ correspondant à l'hypothèse d'apparition de panne à l'instant $\hat{k}$ est enfin sélectionné et fourni dans une dernière sous-étape 240.

Avantageusement, si $R_t[\hat{k}]$ atteint un seuil prédéfini (en fonction de la sensibilité choisie), une alerte signifiant qu'une panne a été détectée se déclenche automatiquement.

*Présélection des mesures - Principe*

Une fois la détection de panne effectuée, le cas échéant le système 20 de contrôle d'intégrité doit décider quelles mesures sont erronées, les exclure, et corriger la solution de navigation en conséquence.

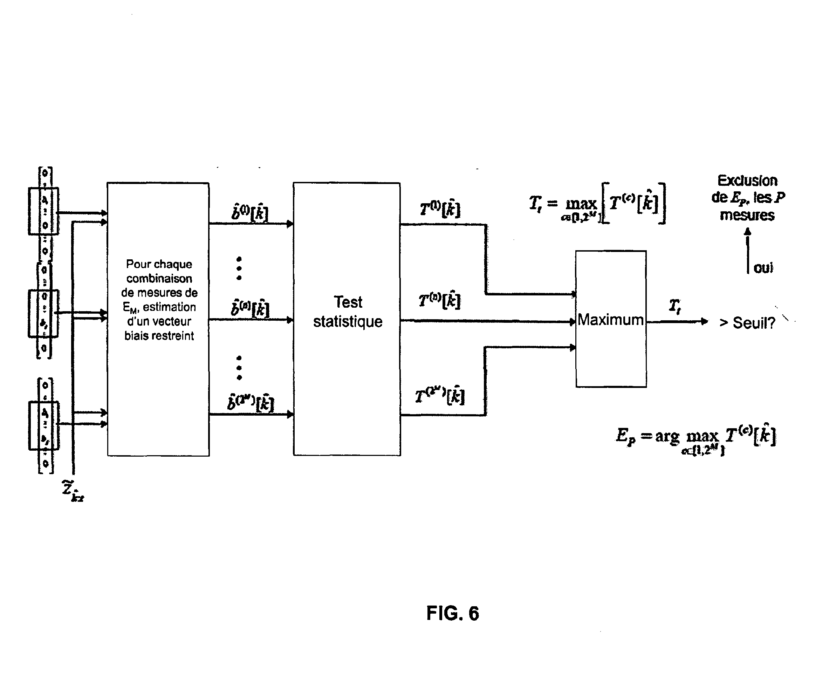

Si l'on veut supposer la possibilité de deux pannes, il était jusque là nécessaire de tester tous les couples de mesures, voire toutes les combinaisons de $K$ parmi $N$ mesures si l'on ne se limite pas au cas double panne. Pour éviter ce test systématique qui nécessite une puissance de calcul que n'ont pas les équipements actuels, l'invention propose d'identifier en deux temps les mesures défaillantes, en effectuant avant le test des différentes combinaisons une première étape permettant de présélectionner les mesures potentiellement défaillantes. Cette étape 300, qui consiste à construire un sous-ensemble $E_M$ contenant les M mesures satellitaires les plus susceptibles de présenter une défaillance, M étant un entier fixé inférieur ou égal à N, est réalisée. Une fois que l'on a effectué cette présélection, on peut se permettre de tester de façon exhaustive les combinaisons restantes de mesures défaillantes, combinaisons dont le nombre s'avère bien moindre qu'avant. Ce procédé est représenté sur la figure 6. Un mode de réalisation particulièrement préféré de cette étape de présélection va suivre.

*Présélection des mesures - Critères de panne*

En notant $b_{i,t}[k]$, ou tout simplement $b_i$ si $k=\hat{k}$, la $i^{\text{ème}}$ composante du vecteur biais apparu à l'instant k, nous supposons que $b_{i,t}[k]$ peut être représenté par une expression dépendant d'un ensemble de paramètres $\theta_i$. Une réalisation possible de cette représentation, mais qui ne constitue pas une limitation à l'invention, peut être :

$$b_{i,t}[k] = \alpha_i + \beta_i(t - k)$$

où $\theta_i=[\alpha_i,\beta_i]$ et $k$ est l'instant d'apparition de la panne sur la mesure $i$. Ce modèle permet de gérer conjointement les pannes de type rampe et échelon.

En connaissant les caractéristiques statistiques des estimations des paramètres $\{\theta_i\}_{i \in [1,N]}$ du vecteur de biais $b_t$, et de façon générale les expressions de biais $b_i$, une valeur représentative de la probabilité d'une défaillance pour chaque pseudo-distance, qu'on appelle un critère de panne noté $\Gamma_i$, est construite au cours d'une première sous-étape 310 pour chaque mesure $i \in [1,N]$. Le critère de panne permet d'identifier, dans un premier temps, les mesures satellitaires susceptibles de présenter le plus vraisemblablement un défaut. En effet, en l'absence de panne sur la mesure i, les paramètres $\theta_i$ doivent être proches de 0, tandis qu'en présence d'une panne sur la mesure $i$, ils doivent différer de 0.

En considérant le biais $b_i$ sur la mesure i mis sous la forme décrite par l'expression ci-dessus, une réalisation du critère de panne sur la mesure $i$ peut être avantageusement :

$$\Gamma_i = \left[\hat{\alpha}_i, \hat{\beta}_i\right]\left(C_i\right)^{-1}\left[\hat{\alpha}_i, \hat{\beta}_i\right]^T$$

où $\hat{\alpha}_i, \hat{\beta}_i$ sont les estimations des paramètres $\alpha_i$, $\beta_i$, $[.]^T$ désigne le transposé d'un vecteur ou d'une matrice et $C_i$ est la matrice de covariance des paramètres $\hat{\alpha}_i$ et $\hat{\beta}_i$. La normalisation par $C_i$ permet de prendre en compte l'influence du bruit de mesure sur la qualité des estimations $\alpha_i$ et $\beta_i$.

*Présélection des mesures - Construction de $E_M$*

Sont déterminées par le système 20 au cours d'une sous-étape 320 les M mesures satellitaires les plus susceptibles de présenter une défaillance d'après les valeurs de $\{\Gamma_i\}_{i \in [1,N]}$. Ainsi, si la formule ci-dessus à été utilisée pour le calcul de $\Gamma_i$, l'ensemble $E_M$ des M mesures satellitaires susceptibles de présenter le plus vraisemblablement un défaut est formé en choisissant les M mesures associées aux M plus grandes valeurs de $\{\Gamma_i\}_{i \in [1,N]}$.

Il est à noter que ces mesures correspondent à l'unique instant d'apparition de pannes $\hat{k}$ fourni lors de l'étape 230. Dans le cas où seulement les hypothèses de simple et double pannes satellitaires simultanées sont envisagées, une réalisation de $M$ pourrait être $M=3$ afin de garantir un degré de liberté dans l'identification des pannes. En effet, il est important que les mesures fautives appartiennent à l'ensemble de mesures $E_M$ présélectionné, sous peine de risquer de ne pas exclure des mesures qui seraient pourtant fautives. De façon générale, on prendra avantageusement M comme étant le nombre maximal de pannes satellitaires supposées plus une.

*Exclusion de pannes*

Il s'agit de l'étape 400. Le principe de l'exclusion de pannes est par exemple fondé sur l'approche présentée par Giremus et Escher. La différence réside dans la restriction du nombre d'hypothèses à considérer. A partir de l'ensemble $E_M$ des M mesures satellitaires potentiellement fautives, de la position estimée lors de l'étape 100 et de l'instant d'apparition de la panne estimé $\hat{k}$ fourni lors de l'étape 230, $\sum_{P=1}^{K} C_M^P$ hypothèses correspondant aux combinaisons de pannes possibles à partir des $M$ mesures sélectionnées lors de la présélection sont considérées, K étant un entier fixé inférieur ou égal à M, avantageusement le nombre maximal de pannes satellitaires envisagé.

Pour cela, pour chaque combinaison de mesures potentiellement fautives une variable de test $T_j$ est tout d'abord calculée lors d'une sous-étape 410 à partir du vecteur biais $b_t$. Avantageusement, le test $T_j$ utilise seulement les composantes $b_i$ correspondant à la combinaison des mesures supposées fautives, et plus particulièrement leurs paramètres $\theta_i$ le cas échéant.

Pour ne garder que les composantes correspondant aux mesures de la combinaison testée, les moyens 21 de traitement utilisent par exemple un vecteur biais $b_t'$ correspondant au vecteur $b_t$ dont les composantes non associées à la combinaison de mesures considérées sont mise à zéro. Le test statistique est alors effectué. Avantageusement c'est un test qui suit une loi du $\chi^2$ à P degrés de liberté, avec P le nombre de mesures de la combinaison considérée, par exemple un test similaire au test de vraisemblance décrit précédemment.

Les valeurs des variables de test $T_j$ sont destinées à être comparées à un seuil prédéfini correspondant à une probabilité d'exclusion manquée donnée, mais dans la mesure où les combinaisons testées ne possèdent pas toutes le même nombre de mesures, le nombre de degrés de liberté et donc le seuil des tests statistiques associés à chaque combinaison est potentiellement différent.

Il en résulte $\sum_{P=1}^{K} C_M^P$ tests statistiques $T_j$ et seuils associés $T_{d,j}$, soit jusqu'à $2^M$ (si $K=M$). Avantageusement, le ratio $R_j = \dfrac{T_j}{T_{d,j}}$ est construit pour chaque combinaison. La combinaison de mesures satellitaires défaillantes la plus vraisemblable est alors sélectionnée au cours de la sous-étape 420, avantageusement la combinaison associée au maximum des variables de test, c'est-à-dire la variable $R_{EP}$ telle que $R_{E_P} = \max\left\{R_j\right\}_{j \in \left[1, 2^M\right]}$.

Les moyens 21 de traitement du système d'intégrité 20 en déduisent directement le sous-ensemble $E_P \subset E_M$ correspondant aux $P$ mesures ($P \leq M$) de la combinaison sélectionnée. La valeur de $P$ n'est pas prédéterminée : Supposer par exemple qu'il y ait jusqu'à deux pannes, n'exclut pas qu'il puisse y avoir une seule panne. La combinaison la plus vraisemblable de mesures satellitaires déficientes pourrait donc être dans ce cas constituée d'une seule mesure.

Si le ratio $R_{EP}$ est supérieure à 1, c'est-à-dire si la variable de test $T_{EP}$ est supérieure au seuil prédéfini correspondant à une probabilité d'exclusion manquée donnée évoqué précédemment, le procédé d'exclusion de pannes désigne les $P$ mesures comme fautives et fournit une nouvelle estimation des paramètres du vecteur de biais pour les $P$ mesures fautives lors de l'étape 430. Dans le cas où le test statistique est inférieur au seuil ($R_{EP}$ <1), l'exclusion n'est pas effectuée mais la détection de panne indique au système qu'un ou plusieurs défauts sont présents sur les mesures satellitaires mais qu'ils ne sont pas encore identifiés.

Avantageusement, à partir des estimations des paramètres du vecteur de biais pour les $P$ mesures fautives et de l'instant d'apparition de la panne estimé k, l'impact des différentes pannes sur la solution de navigation peut être corrigée.

*Systèmes et véhicules*

Selon un deuxième aspect, l'invention concerne des systèmes, en particulier un système de contrôle d'intégrité 20 tel que représenté sur la figure 2. Comme décrit précédemment, le système 20 est associé avec un récepteur 10, de type GNSS, configuré pour recevoir des mesures provenant de N satellites. Le récepteur 10 comprend des moyens 11 de traitement de données et des moyens 12 de gestions de canaux et une mémoire 13. Ces derniers écoutent les satellites 2 visibles, et acceptent ou non les mesures satellitaires de leur part selon les instructions qu'ils ont reçues. Ils transfèrent les mesures de façon classique à des instruments de bord afin de permettre l'exploitation des données de géolocalisation calculées à partir des mesures satellitaires, ainsi qu'au système 20 qui va les contrôler.

Le système 20 comprend lui aussi des moyens 21 de traitement de données, grâce auxquels il va pouvoir mettre en oeuvre un procédé selon le premier aspect de l'invention. Une fois le procédé exécuté, les moyens 21 de traitement vont si nécessaire communiquer aux moyens 12 de gestion de canaux une liste de mesures satellitaires établies comme défaillantes. Les satellites associés sont alors bloqués. Le système 20 comprend éventuellement une interface d'alarme 22. Cette interface 22 peut prendre de nombreuses apparences comme un écran, un haut-parleur, une console d'envoi de messages, et sert de façon générale à avertir de la détection d'au moins une panne satellitaire par le système 20.

En outre, le système 20 et le récepteur 10 peuvent avantageusement être couplé à un système 30 de navigation, tel une centrale inertielle, fournissant aux moyens 21 et 11 de traitement des données de navigation qui peuvent être utilisées lors de l'étape d'estimation de position, afin de se situer dans un contexte AAIM.

L'invention concerne également un véhicule 1, en particulier un avion, équipé d'un tel système 20 de contrôle d'intégrité, ce qui lui permet un niveau de sécurité inégalé, puisqu'il n'ignore plus la possibilité d'avoir deux pannes satellites simultanées, voire davantage, cas qui n'était pas traité auparavant, et qui pouvait conduire à une catastrophe aérienne si une mesure fautive non exclue induisait le pilote en erreur, et permet l'identification de ces pannes. L'invention n'est toutefois pas limitée aux avions et peut équiper tout aéronef, voire navire ou véhicule terrestre, même si l'exigence de d'intégrité des mesures satellitaire n'est pas aussi cruciale.

## Revendications

1. Procédé de détection et d'exclusion d'au moins une pseudo-distance mesurée entre un satellite et un récepteur recevant des signaux émis par différents satellites d'une constellation de radio-positionnement, lorsque cette pseudo-distance est défaillante, **caractérisé en ce qu'**il comprend des étapes de :

    (a) Détermination d'une estimation de la position du récepteur à partir des pseudo-distances mesurées par le récepteur ;
    (b) Estimation, à partir de la position ainsi estimée, des biais dans les pseudo-distances mesurées ;
    (c) Traitement des biais ainsi obtenus afin d'en déduire une valeur représentative de la probabilité d'une défaillance pour chaque pseudo-distance ;
    (d) Présélection, en fonction des valeurs ainsi obtenues, d'un nombre donné de pseudo-distances les plus susceptibles de présenter une défaillance ;
    (e) Détermination, pour chaque combinaison de pseudo-distances parmi les pseudo-distances ainsi présélectionnées, d'une valeur de variable de test représentative de la vraisemblance de la défaillance de la combinaison ;
    (f) Sélection, en fonction des valeurs de variables test ainsi obtenues, d'au moins une combinaison de pseudo-distances dont la défaillance est la plus vraisemblable ;
    (g) Comparaison de la variable de test associée à la combinaison sélectionnée à un seuil prédéfini et transmission d'un signal vers le récepteur ou vers l'extérieur en fonction du résultat de cette comparaison.

2. Procédé selon l'une des revendications précédentes, dans lequel une variable de test $T_j$, $j \in \left[ 1, \sum_{P=1}^{K} C_M^P \right]$, est calculée à l'étape (e) pour toutes les combinaisons possibles de 1 à K pseudo-distances parmi les $M$ pseudo-distances présélectionnées à l'étape (d), $K$ étant un entier fixé inférieur ou égal à $M$.

3. Procédé selon la revendication précédente, dans lequel le calcul de chaque variable de test $T_j$ s'effectue grâce à un test statistique fondé sur une estimation du vecteur biais $b_t$' correspondant à un vecteur biais $b_t$ dont les composantes non associées à la combinaison de mesures considérée sont mises à zéro.

4. Procédé selon l'une des revendications 2 à 3, dans lequel le seuil prédéfini utilisé lors de l'étape (g) est adapté en un seuil $T_{d,j}$ propre à chaque combinaison, le ratio $R_j = \dfrac{T_j}{T_{d,j}}$ étant construit et utilisé en lieu et place des variables de test $T_j$.

**5.** Procédé selon l'une des revendications précédentes, dans lequel l'étape (b) fournit en outre l'estimation k de l'instant d'apparition des biais estimés.

**6.** Procédé selon la revendication précédente, dans lequel l'étape (b) comprend des sous-étapes de :

(b1) Estimation d'une pluralité de vecteur biais $b_t$, chacun sous une hypothèse d'apparition de panne à un instant $k \in [t\text{-}L\text{+}1, t]$ d'une fenêtre d'analyse glissante de taille $L$ fixée ;
(b2) Calcul, à chaque instant $k$ considéré, d'un rapport $R_t[k]$ de vraisemblance entre l'hypothèse d'apparition de panne à l'instant $k$ et l'hypothèse sans panne, en fonction des biais estimés sous l'hypothèse d'apparition de panne à l'instant $k$ ;
(b3) Estimation de l'instant d'apparition de panne le plus vraisemblable $\hat{k}$ à partir des rapports de vraisemblance ;
(b4) Sélection du vecteur biais correspondant à l'hypothèse d'apparition de panne à l'instant $\hat{k}$.

**7.** Procédé selon la revendication précédente, dans lequel l'étape (b) comprend en outre une sous-étape (b5) d'alerte si le rapport de vraisemblance associé à l'instant k atteint un seuil prédéfini.

**8.** Procédé selon l'une des revendications 5 à 7, dans lequel un vecteur biais $b_t$ sous l'hypothèse d'apparition de panne à un instant $k$ est obtenu à partir de l'innovation calculée par un filtre de Kalman à l'instant k, ledit filtre de Kalman réalisant l'étape (a).

**9.** Procédé selon l'une des revendications 5 à 8, dans lequel les biais sont exprimés en fonction du temps $t$ et de l'indice $i$ associé à une pseudo-distance, sous une forme $b_{i,t}[k] = \alpha_i + \beta_i(t - k)$.

**10.** Procédé selon la revendication précédente, dans lequel les valeurs représentatives de la probabilité d'une défaillance pour chaque pseudo-distance obtenus à l'étape (c) sont des critères de panne $\Gamma_i$ exprimés sous une forme $\Gamma_i = [\hat{\alpha_i}, \hat{\beta_i}](C_i)^{-1}[\hat{\alpha_i}, \hat{\beta_i}]^T$.

**11.** Procédé selon l'une des revendications précédentes, dans lequel les M pseudo-distances les plus susceptibles de présenter une défaillance sont les $M$ pseudo-distances associées aux $M$ plus grandes valeurs de $\{\Gamma_j\}_{i \in [1,N]}$, $M$ étant le nombre donné de pseudo-distances à présélectionner.

**12.** Procédé selon l'une des revendications 4 à 11, dans lequel la combinaison de mesures défaillantes la plus vraisemblable est la combinaison associée au ratio $R_{EP}$ tel que $R_{E_P} = \max\{R_j\}_{j \in [1, 2^M]}$.

**13.** Système de contrôle d'intégrité (20), comprenant des moyens (21) de traitement de données, associé à un récepteur (10) recevant des signaux émis par différents satellites d'une constellation de radio-positionnement et fournissant au système (20) des pseudo-distances mesurées entre des satellites de ladite constellation et le récepteur (10) sur lesquelles les moyens (21) mettent en oeuvre un procédé selon l'une des revendications précédentes, à l'issue duquel un signal est transmis au récepteur (10).

**14.** Système selon la revendication précédente, **caractérisé en ce qu'**il est couplé à un dispositif (30) de navigation inertielle selon un contexte AAIM.

**15.** Véhicule (1) équipé d'un système selon l'une des revendications 13 à 14.


**Patentansprüche**

**1.** Verfahren zum Erkennen und Ausschließen mindestens einer Pseudo-Distanz, gemessen zwischen einem Satelliten und einem Empfänger, der Signale empfängt, die durch verschiedene Satelliten einer Funkortungs-Konstellation ausgesendet werden, wenn diese Pseudo-Distanz ausgefallen ist, **dadurch gekennzeichnet, dass** es die folgenden Schritte umfasst:

(a) Bestimmung einer Schätzung der Position des Empfängers ausgehend von den durch den Empfänger gemessenen Pseudo-Distanzen;
(b) Schätzung, ausgehend von der somit bestimmten Position, der Abweichungen in den gemessenen Pseudo-Distanzen;

(c) Verarbeitung der somit erhaltenen Abweichungen, um daraus einen Wert abzuleiten, der für die Wahrscheinlichkeit eines Ausfalls für jede Pseudo-Distanz repräsentativ ist;

(d) Vorauswahl, in Abhängigkeit der somit erhaltenen Werte, einer gegebenen Anzahl von Pseudo-Distanzen, die einen Ausfall am ehesten aufweisen können;

(e) Bestimmung, für jede Kombination von Pseudo-Distanzen aus den somit vorausgewählten Pseudo-Distanzen, eines Wertes einer Testvariable, die für die Wahrscheinlichkeit des Ausfalls der Kombination repräsentativ ist;

(f) Auswahl, in Abhängigkeit von den somit erhaltenen Werten der Testvariablen, mindestens einer Kombination von Pseudo-Distanzen, deren Ausfall am wahrscheinlichsten ist;

(g) Vergleich der Testvariablen, die der ausgewählten Kombination zugeordnet ist, mit einem vordefinierten Schwellenwert, und Übertragung eines Signals zu dem Empfänger oder zu der Außenwelt in Abhängigkeit von dem Ergebnis dieses Vergleichs.

2. Verfahren nach einem der vorhergehenden Ansprüche, bei dem eine Test-variable $T_j$, $j \in \left[ 1, \sum_{P=1}^{K} C_M^P \right]$, in Schritt (e) für sämtliche möglichen Kombinationen von 1 bis $K$ Pseudo-Distanzen aus den $M$ in Schritt (d) vorausgewählten Pseudo-Distanzen berechnet wird, wobei $K$ eine feste ganze Zahl kleiner oder gleich $M$ ist.

3. Verfahren nach dem vorhergehenden Anspruch, bei dem die Berechnung jeder Testvariablen $T_j$ mit Hilfe eines statistischen Tests vorgenommen wird, der auf einer Schätzung des Abweichnungsvektors $b_l'$ beruht, der einem Abweichnungsvektor $b_l$ entspricht, dessen Komponenten, die nicht der betrachteten Kombination von Messungen zugeordnet sind, auf Null gesetzt sind.

4. Verfahren nach einem der Ansprüche 2 bis 3, bei dem der vordefinierte Schwellenwert, der in Schritt (g) verwendet wird, in einen Schwellenwert $T_{d,j}$ adaptiert ist, der für jede Kombination charakteristisch ist, wobei das Verhältnis

$$R_j = \frac{T_j}{T_{d,j}}$$ an Stelle der Testvariablen $T_j$ konstruiert und verwendet wird.

5. Verfahren nach einem der vorhergehenden Ansprüche, bei dem Schritt (b) ferner die Schätzung $\hat{k}$ des Zeitpunkts des Auftretens der geschätzten Abweichungen bereitstellt.

6. Verfahren nach dem vorhergehenden Anspruch, bei dem Schritt (b) die folgenden Teilschritte umfasst:

(b1) Schätzung einer Vielzahl von Abweichungsvektoren $b_t$, jeweils unter einer Hypothese des Auftretens eines Ausfalls zu einem Zeitpunkt $k \in [t-L+1,t]$ eines sich verschiebenden Analysefensters einer festen Größe $L$;

(b2) Berechnung, zu jedem betrachteten Zeitpunkt k, eines Wahrscheinlichkeitsverhältnisses $R_t[k]$ zwischen der Hypothese des Auftretens eines Ausfalls zum Zeitpunkt $k$ und der Hypothese ohne Ausfall, in Abhängigkeit von den unter der Hypothese des Auftretens eines Ausfalls zu einem Zeitpunkt k geschätzten Abweichungen;

(b3) Schätzung des wahrscheinlichsten Zeitpunkts $\hat{k}$ des Auftretens eines Ausfalls ausgehend von den Wahrscheinlichkeitsverhältnissen;

(b4) Auswahl des Abweichungsvektors, welcher der Hypothese des Auftretens eines Ausfalls zum Zeitpunkt $\hat{k}$ entspricht.

7. Verfahren nach dem vorhergehenden Anspruch, bei dem Schritt (b) ferner einen Teilschritt (b5) des Warnens umfasst, wenn das dem Zeitpunkt $\hat{k}$ zugeordnete Wahrscheinlichkeitsverhältnis einen vordefinierten Schwellenwert erreicht.

8. Verfahren nach einem der Ansprüche 5 bis 7, bei dem ein Abweichungsvektor $b_t$ unter der Hypothese des Auftretens eines Ausfalls zu einem Zeitpunkt $k$ ausgehend von der Innovation erhalten wird, die durch einen Kalman-Filter zum Zeitpunkt k berechnet wird, wobei der Kalman-Filter Schritt (a) ausführt.

9. Verfahren nach einem der Ansprüche 5 bis 8, bei dem die Abweichungen in Abhängigkeit von der Zeit t und von dem Index $i$, der einer Pseudo-Distanz zugeordnet ist, in einer Form $b_{i,t}[k] = \alpha_i + \beta_i(t-k)$ ausgedrückt werden.

10. Verfahren nach dem vorhergehenden Anspruch, bei dem die für die Wahrscheinlichkeit eines Ausfalls für jede Pseudo-Distanz repräsentativen Werte, die in Schritt (c) erhalten werden, Ausfallkriterien $\Gamma_i$ sind, die in einer Form

$\Gamma_i = [\hat{\alpha_i}, \hat{\beta_i}](C_i)^{-1}[\hat{\alpha_i}, \hat{\beta_i}]^T$ ausgedrückt werden.

**11.** Verfahren nach einem der vorhergehenden Ansprüche, bei dem die *M* Pseudo-Distanzen, die am ehesten einen Ausfall aufweisen können, die *M* Pseudo-Distanzen sind, die den *M* größten Werten von $\{\Gamma_i\}_{i \in [1,N]}$ zugeordnet sind, wobei *M* die gegebene Anzahl von vorauszuwählenden Pseudo-Distanzen ist.

**12.** Verfahren nach einem der Ansprüche 4 bis 11, bei dem die wahrscheinlichsten Kombination von ausgefallenen Messungen die Kombination ist, die dem Verhältnis $R_{E_P}$, wie $R_{E_P} = max\{R_j\}_{j \in [1, 2^M]}$, zugeordnet ist.

**13.** Integritätskontrollsystem (20), umfassend Mittel (21) zur Datenverarbeitung, das einem Empfänger (10) zum Empfangen von Signalen, die von unterschiedlichen Satelliten einer Funkortungs-Konstellation gesendet werden, zugeordnet ist, wobei der Empfänger (10) dem System (20) Pseudo-Distanzen, die zwischen den Satelliten der Konstellation und dem Empfänger (10) gemessen werden, bereitstellt, anhand derer die Mittel (21) ein Verfahren nach einem der vorhergehenden Ansprüche ausführen, an dessen Ende ein Signal an den Empfänger (10) gesendet wird.

**14.** System nach dem vorhergehenden Anspruch, **dadurch gekennzeichnet, dass** es mit einer Vorrichtung (30) zur inertialen Navigation gemäß einem AAIM-Kontext verbunden ist.

**15.** Fahrzeug (1), das mit einem System nach einem der Ansprüche 13 bis 14 ausgestattet ist.

**Claims**

**1.** A method for detection and exclusion of at least one pseudo-distance measured between a satellite and a receiver receiving signals emitted by different satellites of a radio-positioning constellation, when this pseudo-distance is faulty, **characterised in that** it comprises steps of:

   (a) Determining estimation of the position of the receiver from the pseudo-distances measured by the receiver;
   (b) Estimating, from the accordingly estimated position, biases in the pseudo-distances measured;
   (c) Processing accordingly obtained biases to deduce therefrom a value representative of the probability of failure for each pseudo-distance;
   (d) Pre-selecting, as a function of the accordingly obtained values, a given number of pseudo-distances the likeliest to present failure;
   (e) Determining, for each combination of pseudo-distances among the accordingly pre-selected pseudo-distances, a variable test value representative of the likelihood of the failure of the combination;
   (f) Selecting, as a function of the accordingly obtained variable test values, at least one combination of pseudo-distances failure of which is the likeliest;
   (g) Comparing the test variable associated with the selected combination at a predefined threshold and transmission of a signal to the receiver or outwards as a function of the result of this comparison.

**2.** The method according to any one of the preceding claims, wherein a test variable $T_j$, $T_j$, $j \in \left[1, \sum_{P=1}^{K} C_M^P\right]$ is calculated at step (e) for all possible combinations of 1 to *K* pseudo-distances among the *M* pseudo-distances pre-selected at step (d), *K* being a fixed whole number less than or equal to *M*.

**3.** The method according to the preceding claim, wherein the calculation of each test variable $T_j$ is carried out by means of a statistical test based on estimation of the bias vector $b_t{'}$ corresponding to a bias vector $b_t$, whereof the components not associated with the considered combination of measurements are set to zero.

**4.** The method according to one of Claims 2 to 3, wherein the predefined threshold used during step (g) is adapted in a threshold $T_{d,j}$ specific to each combination, the ratio $R_j = \dfrac{T_j}{T_{d,j}}$ being constructed and used in place of the test variables $T_j$.

**5.** The method according to one of the preceding claims, wherein step (b) also provides the estimation $\hat{k}$ of the instant of emergence of estimated biases.

6. The method according to the preceding claim, wherein step (b) comprises the sub-steps of:

(b1) Estimating a plurality of bias vectors $b_t$, each under the assumption of the emergence of a failure at an instant $k \in [t-L+1,t]$ a sliding window of analysis of fixed size L;
(b2) Calculating, at each instant $k$ in question, a ratio $R_t[k]$ of likelihood between the assumption of the emergence of a failure at the instant $k$ and the assumption without failure, as a function of estimated biases under the assumption of the emergence of a failure at the instant $k$;
(b3) Estimating the instant of emergence of the likeliest failure $\hat{k}$ from likelihood ratios;
(b4) Selecting the bias vector corresponding to the assumption of the emergence of a failure at the instant $\hat{k}$.

7. The method according to the preceding claim, wherein step (b) also comprises an alert sub-step (b5) if the likelihood ratio associated with the instant $\hat{k}$ reaches a predefined threshold.

8. The method according to any one of Claims 5 to 7, wherein a bias vector $b_t$ under the assumption of the emergence of a failure at an instant $k$ is obtained from the innovation calculated by a Kalman filter at the instant k, said Kalman filter performing step (a).

9. The method according to one of Claims 5 to 8, wherein the biases are expressed as a function of time t and of the index i linked to a pseudo-distance, in the form $b_{i,t}[k]=\alpha_i+\beta_i(t-k)$.

10. The method according to the preceding claim, wherein the representative values of the probability of failure for each pseudo-distance obtained at step (c) are failure criteria $\Gamma_i$ expressed in the form $\Gamma_i=[\hat{\alpha}_i,\hat{\beta}_i](C_i)^{-1}[\hat{\alpha}_i,\hat{\beta}_i]^{\mathsf{T}}$.

11. The method according to one of the preceding claims, wherein the M pseudo-distances the likeliest to present failure are the $M$ pseudo-distances associated with the M largest values of $\{\Gamma_i\}_{i \in [1,N]}$, M being the given number of pseudo-distances to be pre-selected.

12. The method according to one of Claims 4 to 11, wherein the combination of the likeliest faulty measurements is the combination associated with the ratio $R_{EP}$ such as $R_{E_P} = \max\{R_j\}_{j \in [1,2^M]}$.

13. An integrity-control system (20), comprising data-processing means (21), linked to a receiver (10) receiving signals transmitted by different satellites of a radio-positioning constellation and supplying the system (20) with pseudo-ranges measured between satellites of said constellation and the receiver (10) on which the means (21) execute a method according to one of the preceding claims, on completion of which a signal is transmitted to the receiver (10).

14. A system according to the preceding claim, **characterised in that** it is coupled to an inertial navigation device (30) according to an AAIM context.

15. A vehicle (1) equipped with a system according to one of Claims 13 to 14.

FIG. 1

FIG. 2

FIG. 3

FIG. 4

100 → | Estimation de position |

210 → | Estimation de vecteurs biais pour une pluralité d'instants d'apparition de panne |

220 → | Calcul des rapports de vraisemblance |

230 → | Estimation de l'instant d'apparition de panne le plus vraisemblable |

240 → | Sélection du vecteur biais à l'instant d'apparition de panne le plus vraisemblable |

200

310 → | Calcul des critères de panne |

320 → | Détermination des mesures les plus susceptibles de présenter une défaillance |

300

410 → | Calcul des variables de test, seuils et ratios |

420 → | Sélection de la combinaison de mesures dont la défaillance la plus vraisemblable |

430 → | Exclusion des mesures sélectionnées |

400

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. SCHROTH ; A. ENE ; J. BLANCH ; T.WALTER ; P. ENGE.** Failure detection and exclusion via range consensus. *Proceedings of the ENC GNSS,* 2008
- On integrity monitoring of integrated navigation systems. Thesis No. 600. Linkôping Studies in Science and Technology, 1997
- **GIREMUS ; ESCHER.** A GLR algorithm to detect and exclude up to two simultaneous range failures in a GPS/Galileo/IRS Case. *Proc. of ION GNSS,* 2007